**Europäisches Patentamt**

**European Patent Office**

**Office européen des brevets**

(11) Veröffentlichungsnummer: **0 017 142**
**A1**

(12) # EUROPÄISCHE PATENTANMELDUNG

(21) Anmeldenummer: **80101573.6**

(22) Anmeldetag: **25.03.80**

(51) Int. Cl.³: **F 16 H 15/18**

(30) Priorität: **27.03.79 DE 2911933**

(43) Veröffentlichungstag der Anmeldung:
**15.10.80 Patentblatt 80/21**

(84) Benannte Vertragsstaaten:
**FR GB IT NL**

(71) Anmelder: **ITT INDUSTRIES, INC.**
**320 Park Avenue**
**New York, NY 10 022(US)**

(72) Erfinder: **Tippmann, Heinrich**
**Bauseweinallee 83**
**D-8000 München(DE)**

(74) Vertreter: **Thul, Leo, Dipl.-Phys. et al,**
**Kurze Strasse 8 Postfach 300 929**
**D-7000 Stuttgart 30(DE)**

(54) **Stufenlos einstellbares Trockenreibgetriebe.**

(57) Ein als Schwenkgetriebe ausgebildetes Reibgetriebe mit stetig verstellbarer Drehzahlverstellung und nachgeschalteter Übersetzung ist vollständig trocken laufend ausgebildet. Besonders günstig für den Einsatz dort, wo hohe Sauberkeit und Sicherheit gegenüber Verunreinigung erforderlich ist, z.B. Lebensmittelherstellung oder Verarbeitung.

EP 0 017 142 A1

./...

Fig.1

Patentanwalt
Dipl.-Phys. Leo Thul
Postfach 300 929, Kurze Str. 8
D-7000 Stuttgart 30, Deutschland

H.Tippmann-12

Stufenlos einstellbares Trockenreibgetriebe

Die Erfindung betrifft ein Schwenkgetriebe, bei dem Antrieb und Abtrieb unverschiebbar über ein Trockenreibgetriebe miteinander verbunden sind, von dem ein Teil an einem Schwenkarm befestigt ist, an dem gleichfalls eine mit dem Reibgetriebe gekuppelte, das Drehmoment auf die Abtriebswelle übertragende Übersetzung angeordnet ist.

Ein solches Getriebe ist bekannt (Katalog "Stufenlose Ganzstahl-Regeltriebe" der Fa. Ströter, Düsseldorf Ausgabe 3/74). Bei dem bekannten Getriebe (siehe stufenloser STRÖTER Ganzstahl-Regeltrieb Typ A) ist der Motor fest mit dem Getriebegehäuse verschraubt. Die Kraftübertragung zwischen dem Motor bzw. der Antriebswelle und der Abtriebswelle erfolgt zunächst durch Reibschluß zwischen einer auf der Antriebswelle sitzenden Laufscheibe und einem in der Schwinge gelagerten Laufteller mit einem Reibring. Die Drehzahlverstellung erfolgt durch das Schwenken der Schwinge im Gehäuse. Auf der Schwinge ist auch ein mit dem Laufteller gekuppeltes Ritzel angeordnet, welches das Drehmoment bei gleichzeitiger Drehzahlübersetzung ins Langsame auf die ortsfeste Abtriebswelle überträgt. Sämtliche Teile des bekannten Getriebes bestehen aus Metall und laufen im Ölbad.

Es ist ein anderes Getriebe bekannt (Katalog "Stufenlos einstellbare Prym L-Getriebe" Nr. 5 z.B. PRYM L3 Getriebe), bei dem der Antriebsmotor einen Graugußkegel antreibt, der im Reibschluß mit einem Reibring aus Hartgewebe steht. Die Anpressung zwischen Kegel und Reibring erfolgt durch eine

Bö/Sam
22.3.79

-/-

H.Tippmann-12

Anpreßvorrichtung. Die Drehzahlverstellung erfolgt bei
diesem bekannten Getriebe dadurch, daß der Motor mit dem
Antriebskegel auf- und abwärts verschoben werden kann,
wobei die Führung des Motors durch das Zusammenwirken
einer schwalbenschwanzförmigen Nut und einer Stelleiste
erfolgt. Bei diesem bekannten Getriebe ist die Reibpaarung trocken laufend angeordnet, während das nachgeschaltete Stahl-Zahnradgetriebe im Ölbad angeordnet ist.

Abgesehen davon, daß bei dem zweiten bekannten Getriebe
durch den nicht ortsfesten Motor die ganze Anordnung kein
genau abgegrenztes Gehäuse besitzt, ist der beiden bekannten Getrieben gemeinsame wesentlich Nachteil darin zu sehen,
daß sie ganz oder teilweise mit Öl gefüllt sind. Dies ist
deshalb so nachteilig, weil bei Auftreten eines Lecks die
Umgebung des Getriebes durch das entweichende Öl mehr oder
minder verunreinigt wird. Aus diesem Grund sind die bekannten Getriebe für bestimmte Anwendungen nicht oder erst nach
Erfüllung zusätzlicher Auflagen zugelassen.

Sehr strenge Anforderungen werden beispielsweise an Antriebe
gestellt, welche in unmittelbarer Nachbarschaft mit Lebensmitteln, Pharmazeutika oder dgl. verwendet werden.

Häufig werden die bekannten Getriebe in der Weise verwendet,
daß sie nicht von einem Elektromotor direkt angetrieben werden, sondern die freien Wellenenden mit Riemenscheiben versehen oder über Verbindungskupplungen verlängert sind. Bei
diesen Ausführungsformen ist ein auf- und abwärts verschiebbarer Antriebsteil besonders ungünstig.

-/-

Das verschiebbare Gehäuseteil erschwert auch das hermetische Verschließen des Getriebeinnenraumes erheblich, so daß entweder Abrieb des Reibringes nach außen oder aggressive Medien von außen nach innen gelangen können.

Die der Erfindung zugrunde liegende Aufgabe besteht deshalb darin, ein Getriebe zu schaffen, bei dem eine Verunreinigung der Umgebung, hauptsächlich durch Öl oder sonstige flüssige Schmierstoffe, ausgeschlossen ist, so daß auch keine aufwendigen und teuren Vorkehrungen zur Verhinderung einer Umweltverschmutzung erforderlich sind. Außerdem sollen An- und Abtrieb ortsfest angeordnet und nach dem stufenlos einstellbaren Getriebeteil eine Übersetzung, in der Regel ins Langsame, eingebaut sein.

Diese Aufgabe ist bei einem Getriebe der eingangs erwähnten Art erfindungsgemäß dadurch gelöst, daß sowohl das Reibgetriebe als auch die Übersetzung trocken laufend angeordnet sind.

Die vorgeschlagenen Lösung schafft nicht nur ein Getriebe, bei dem ohne zusätzlichen Aufwand die Gefahr des Entweichens von Öl entfällt, sondern bei dem die ansich bekannte und für einfache Anwendungsfälle bewährte Kegel-Reibring-Trockenpaarung in einem abgegrenzten Gehäuse mit ortsfestem An- und Abtrieb angeordnet ist.

Diese Vorzüge werden in keiner Weise beeinträchtigt, wenn im Bedarfsfall eine einmalige Schmierung mit Fließfett, Einlaufpaste, Gleitlack, Schmierfilmspray oder einem ähnlichen Mittel vorgenommen wird, um beispielsweise bei einer

- 4 -

H. Tippmann-12

Zahnradübersetzung das Gleiten der Zahnräder beim Einlauf zu verbessern.

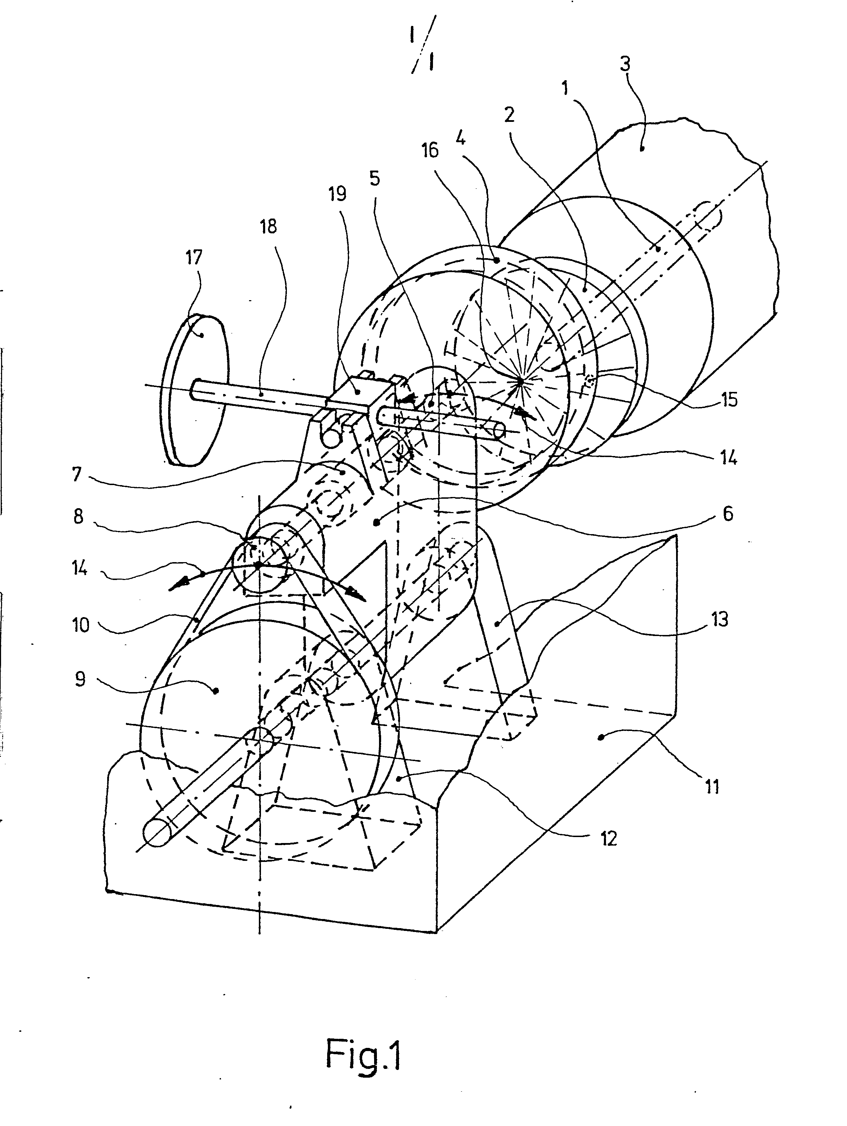

Vorteilhafte Ausgestaltungen der Erfindung sind in den Ansprüchen 2 bis 7 enthalten, und die Figur zeigt in schematicher, perspektivisher Darstellung ein Ausführungsbeispiel des neuen Getriebes.

Auf der ortsfesten, drehbar gelagerten Antriebswelle 1 ist der Antriebskegel 2 befestigt. Die Antriebswelle 1 selbst kann entweder, wie strichpunktiert dargestellt, frei aus dem Gehäuse ragen oder z.B. einstückig mit der Rotorwelle eines fest angeflanschten Antriebsmotors 3 verbunden sein. Im Eingriff mit dem Antriebskegel 2 steht der Reibring 4, der mittels der Zwischenwelle 5 drehbar im Schwenkarm 6 gelagert ist. Die erforderliche Anpreßkraft zwischen Antriebskegel 2 und Reibring 4 wird von der gleichfalls im Schwenkarm 6 angeordneten an sich bekannten Anpreßvorrichtung 7 (z.B. Kurvenscheiben oder Tellerfedern) erzeugt.

Die Anpreßvorrichtung gleicht zusätzlich eine geringe Axialverschiebung des Reibringes aus, die entweder durch die Abnützung des Reibringes und/oder durch die Kegelneigung beim Verschwenken des Schwenkarmes verursacht wird.

Die Drehbewegung des Reibringes wird über die Anpreßvorrichtung auf die Übersetzung übertragen, welche bei diesem Ausführungsbeispiel aus den beiden Riemenscheiben 8 und 9 und dem Riemen 10 besteht. Die große Riemenscheibe 9 ist auf der einen Seite im Getriebsgehäuse 11 und auf der anderen

-/-

Seite im Lagerbock 12 gelagert. Der Schwenkarm 6 ist koaxial zur Riemenscheibenlagerung in den beiden Lagerböcken 12 und 13 gelagert.

Die stufenlose Vorstellung der Reibpaarung (Antriebskegel 2 - Reibring 4) erfolgt durch Verschwenken des Schwenkarmes 6 wahlweise in beiden Schwenkrichtungen entsprechend Pfeil 14. Dabei wandert die Berührungsfläche 15 entweder in Richtung Kegelspitze 16 oder davon weg und ändert somit den wirksamen Radius des Antriebskegels 2. Das Verstellen selbst erfolgt über eine Verstelleinrichtung, die aus einem Handrad 17 und der mit diesem verbundenen, im Getriebegehäuse drehbar gelagerten Gewindespindel besteht. Die Gewindespindel durchdringt eine mit dem Schwenkarm verbundene Spindelmutter 19. Durch Drehen des Handrades wird somit der Schwenkarm 6 verschwenkt und damit die Übersetzung der Reibpaarung verändert.

Das vorstehend beschrieben Getriebe, bei dem die Übersetzung auf unterschiedliche Weise ausgebildet sein kann, enthält weder eine Schmiermittelfüllung, wie ein Ölbad für die Übersetzung noch eine Flüssigkeit für die stufenlos verstellbare Reibpaarung, wie sie bei den Ganzstahlgetrieben erforderlich ist.

Die Schmierung der Wellenlager, die in der Regel als Wälzlager ausgebildet sind, erfolgt über wartungsfreie, abgedichtete Lager. Die Lagerung des Schwenkarmes sowie bei kleineren Leistungen auch die Lagerung der übrigen Wellen kann durch moderne, Trockengleitlager bzw. getränkte Sinterlager erfolgen.

## Bezugszeichen

1  Antriebswelle

2  Antriebskegel

3  Antriebsmotor

4  Reibring

5  Zwischenwelle

6  Schwenkarm

7  Anpreßvorrichtung

8  kleine Riemenscheibe

9  große Riemenscheibe

10 Riemen

11 Getriebegehäuse

12 Lagerbock

13 Lagerbock

14 Pfeil für Schwenkrichtungen

15 Berührungsfläche Kegel-Ring

16 Kegelspitze des Antriebskegels

17 Handrad

18 Gewindespindel

19 Spindelmutter

H.Tippmann-12

Stufenlos einstellbares Trockenreibgetriebe

Ansprüche:

1) Schwenkgetriebe, bei dem Antrieb und Abtrieb unverschiebbar über ein Trockenreibgetriebe miteinander verbunden
sind, von dem ein Teil an einem Schwenkarm befestigt ist,
an dem gleichfalls eine mit dem Reibgetrieb gekuppelte,
das Drehmoment auf die Abtriebswelle übertragende Übersetzung angeordnet ist,
dadurch gekennzeichnet, daß sowohl das Reibgetriebe als
auch die Übersetzung trocken laufend angeordnet sind.

2) Schwenkgetriebe nach Anspruch 1,
dadurch gekennzeichnet, daß die Übersetzung aus miteinander kämmenden Zahnrädern besteht.

3) Schwenkgetriebe nach Anspruch 1,
dadurch gekennzeichnet, daß die Übersetzung aus einem
weiteren Reibgetriebe besteht.

4) Schwenkgetriebe nach Anspruch 1,
dadurch gekennzeichnet, daß die Übersetzung aus einem
Umschlingungsgetriebe besteht.

22.3.79
Bö/Sam

- 8 -

H.Tippmann-12

5) Schwenkgetriebe nach Anspruch 1 und einem der Ansprüche
2 bis 4,
   <u>dadurch gekennzeichnet</u>, daß beim Reibgetriebe das Kegelrad aus Grauguß und der Reibring aus Kunststoff, Hartgewebe oder Kunstkohle besteht.

6) Schwenkgetriebe nach den Ansprüchen 1 und 2,
   <u>dadurch gekennzeichnet</u>, daß bei der Übersetzung das
   Ritzel aus Stahl und das Zahnrad aus Kunstharzpreßholz
   Hartgewebe oder Kunststoff besteht.

7) Schwenkgetriebe nach den Ansprüchen 1 und 2,
   <u>dadurch gekennzeichnet</u>, daß Ritzel und Zahnrad aus einem
   ölgetränkten Sinterwerkstoff bestehen.

Fig.1

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - C - 724 409</u>  (E. HERBST & CO)<br>+ Gesamt +<br>-- | 1,4 |
| X | <u>FR - A - 877 261</u>  (A. FRIEDR. FLENDER & CO)<br>+ Gesamt +<br>-- | 1,4 |
| X | <u>AT - B - 170 741</u>  (DR. JOSEF BEIER)<br>+ Fig. 1,2,3 +<br>-- | 1,2 |
| X | <u>DE - C - 856 816</u>  (BIERER)<br>+ Seite 2, Zeilen 41-44 +<br>-- | 1,2 |
| X | <u>DE - C - 668 775</u>  (PRYM)<br>+ Gesamt +<br>-- | 1,2 |
| X | <u>DE - C - 638 675</u>  (PRYM)<br>+ Gesamt +<br>-- | 1,2 |
|  | <u>DE - C - 700 777</u>  (HIMMELWERK)<br>-- | 1,2,4 |
|  | <u>US - A - 2 818 740</u>  (WUERTZ)<br>-- | 1,2 |
|  | <u>DE - A - 1 550 947</u>  (SCHMIDER)<br>+ Anspruch 1, Zeile 1 +<br>-- | 1,2,5 |
|  | <u>US - A - 1 422 550</u>  (EGERTON)<br>+ Seite 2, Zeilen 28-34 +<br>-- | 5 |

### KLASSIFIKATION DER ANMELDUNG (Int.Cl. 3)

F 16 H 15/18

### RECHERCHIERTE SACHGEBIETE (Int. Cl. 3)

F 16 H 15/00
F 16 H 37/00
F 16 H 55/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 25-06-1980 | BAUMANN |

EPA form 1503.1  06:78

Nummer der Anmeldung

EP 80101573.6

Europäisches
Patentamt

**EUROPÄISCHER RECHERCHENBERICHT**

| | EINSCHLÄGIGE DOKUMENTE | | | KLASSIFIKATION DER ANMELDUNG (Int.Cl. 3 |
|---|---|---|---|---|
| Kategorie | Kennzeichnung des Dokuments mit Angabe, soweit erforderlich, der maßgeblichen Teile | betrifft Anspruch | | |
| X | DE - A - 2 027 027 (CARDING) + Gesamt + ---- | 1,4,5 | | |
| | | | | RECHERCHIERTE SACHGEBIETE (Int. Cl. 3 |

EPA Form 1503.2   06.78